(19) Europäisches Patentamt

European Patent Office

Office européen des brevets

(11) **EP 1 327 876 B1**

(12) **EUROPÄISCHE PATENTSCHRIFT**

(45) Veröffentlichungstag und Bekanntmachung des Hinweises auf die Patenterteilung:
**17.12.2003 Patentblatt 2003/51**

(51) Int Cl.⁷: $G01N\ 22/02$

(21) Anmeldenummer: **02000725.8**

(22) Anmeldetag: **11.01.2002**

(54) **Verfahren und Vorrichtung zur Erkennung von Fremdkörpern in Masseströmen mit Hilfe eines Mikrowellen-Resonators**

Method and apparatus for detecting foreign bodies in mass streams using a microwave resonator

Procédé et dispositif pour détecter des corps étrangers dans des flux de masse utilisant un résonateur hyperfréquence

(84) Benannte Vertragsstaaten:
**DE ES FR GB IT NL**

(43) Veröffentlichungstag der Anmeldung:
**16.07.2003 Patentblatt 2003/29**

(73) Patentinhaber: **TEWS ELEKTRONIK Dipl.-Ing. Manfred Tews**
**22459 Hamburg (DE)**

(72) Erfinder:
- **Herrmann, Rainer, Dipl.-Phys.**
  **20253 Hamburg (DE)**
- **Zaage, Stefan, Dipl.-Ing. Dr.**
  **30655 Hannover (DE)**
- **Ceslik, Harald, Dipl.-Ing.**
  **22459 Hamburg (DE)**

(74) Vertreter: **Glawe, Delfs, Moll & Partner**
**Patentanwälte**
**Rothenbaumchaussee 58**
**20148 Hamburg (DE)**

(56) Entgegenhaltungen:
**EP-A- 0 889 321       EP-A- 1 221 608**
**WO-A-02/09539**

- **PATENT ABSTRACTS OF JAPAN vol. 013, no. 001 (P-808), 6. Januar 1989 (1989-01-06) & JP 63 210757 A (NIPPON GLASS FIBER CO LTD), 1. September 1988 (1988-09-01)**
- **PATENT ABSTRACTS OF JAPAN vol. 012, no. 255 (P-732), 19. Juli 1988 (1988-07-19) & JP 63 045547 A (NIPPON KOSHUHA KK), 26. Februar 1988 (1988-02-26)**
- **BOLTZE T: "A microwave model for moisture determination in bulk materials and a maximum likelihood estimation algorithm" MICROWAVE SYMPOSIUM DIGEST, 1995., IEEE MTT-S INTERNATIONAL ORLANDO, FL, USA 16-20 MAY 1995, NEW YORK, NY, USA,IEEE, US, 16. Mai 1995 (1995-05-16), Seiten 1023-1026, XP010141437 ISBN: 0-7803-2581-8**

**Beschreibung**

Die Erfindung betrifft ein Verfahren zum Erkennen von Fremdkörpern in kontinuierlichen Masseströmen aus faserförmigem, strangförmigem oder schüttgutartigem Material mit Hilfe von Mikrowellen, bei dem der Massertrom durch der Feld eines Mikrowellen-Resonators geführt wird und bei den die durch das Material bewirkte Änderung (A) der Resonanz-frequenz und die Änderung (B) der Breite der Resonanzkurve des Mikrowellen-Resonators bestimmt wird.

In zahlreichen Prozessen der verarbeitenden Industrie, in der nichtmetallische Produkte in Masseströmen verarbeitet werden, wirken sich unbeabsichtigt in den Produktstrom gelangte Fremdkörper meist äußerst schädlich auf die folgenden Prozeßschritte, die Qualität des Produktes oder die Produktionsanlagen aus.

So kommt es bei der Herstellung von Garnen in der Textilindustrie auf eine gute Homogenität bereits in der Spinnerei-Vorbereitung an, wenn die Baumwoll- und Kunststofffasern in Karden und Streckvorrichtungen parallel ausgerichtet und homogenisiert werden. Inhomogenitäten in der Faserverteilung, verursacht durch eingelagerte Fremdkörper oder Nissen, wirken sich im Endprodukt, dem fertig gewobenen Stoff oder der Gardine als jedem Kunden offensichtliche Qualitätsverminderung aus. Es kommt also darauf an, durch Messung mit Hilfe von Mikrowellen-Resonatoren rechtzeitig eine Warnung bereits in der Spinnereivorbereitungsmaschine abzugeben und gegebenenfalls eine manuelle oder automatische Ausschleusung des Fremdkörpers zu veranlassen.

In der Fertigung von Zigaretten sind die aus den Tabakanbaugebieten angelieferten Tabakballen manchmal mit allerlei Fremdkörpern wie Textilresten, Plastikstücken, Gummiteilen, Metalldrähten, Holzresten oder Insekten verunreinigt. Auch auf den langen Wegen der Tabakaufbereitung bis zur Zigarettenmaschine können durch Unachtsamkeit Fremdkörper in den Tabak gelangen. Letztlich bedeutet ein nicht beseitigter Fremdkörper in einer Zigarette nicht nur eine extreme Herabsetzung der Qualität der Zigarette sondern, je nach Art des Fremdkörpers beim Verbrennen und Inhalieren des Rauches eine Gefährdung des Konsumenten, wenn wie beim Verbrennen von Halogenkohlenwasserstoffen Halogensäure entstehen kann. Es kommt also darauf an, durch eine zuverlässige Erkennung von Fremdkörpern an einer Stelle, wo keine Fremdkörper mehr in den Tabak gelangen können (z.B. bei der Formung des Zigarettenstranges und seiner Umhüllung mit Papier) mit Hilfe eines Mikrowellen-Resonators nach der Zerschneidung des Stranges in Strangstücke eine automatische Ausschleusung der kontaminierten Zigarette zu veranlassen. Da diese ausgeschleusten Zigaretten nicht mehr recycelt werden können sondern verbrannt werden, ist aus wirtschaftlichen Gründen an die Meßtechnik eine hohe Anforderung gestellt: Die Fehlauswurfquote bei noch zuverlässiger Fremdkörperdetektion darf ein Promille der produzierten Zigaretten nicht übersteigen, da selbst bei dieser Quote bei typischerweise pro Unternehmen produzierten ca. 200 Milliarden Zigaretten pro Jahr 200 Millionen als kontaminiert vernichtet würden.

In vielen Bereichen der chemischen Industrie können unerwünschte Fremdkörper nicht nur zu einer Verminderung der Produktqualität sondern zu einer Schädigung der Produktionsanlagen führen. Zelluloseacetat-Kunstfasern (hauptsächlich zur Produktion von Zigarettenfiltern eingesetzt) werden aus in Azeton gelöstem Zelluloseacetat-Granulat durch Auspressen aus feinen Spinndüsen hergestellt. Fremdkörper im Granulat, die nicht in Lösung übergehen, können die Spinndüsen verstopfen und zu Fadenbrüchen bei der Faserherstellung führen. Glas wird aus der Schmelze von Quarzsand hergestellt. Fremdkörper im Quarzsand können zu irreparablen Schäden der Schmelzöfen führen. Auch hier kommt es darauf an, mittels der Produktführung des Schüttgutes durch eine geeignete Meßanordnung die veränderte Stoffzusammensetzung aufgrund eines Fremdkörpers zu erkennen und seine Ausschleusung zu veranlassen, ohne daß sich die gleichzeitig im Schüttprozeß auftretenden enormen Dichteschwankungen störend auf die Messung auswirken.

Unter Fremdkörpern sind somit einerseits alle schwerwiegenden Veränderungen der physikalischen oder chemischen Zusammensetzung eines Produktes zu verstehen, die über die übliche statistische Fluktuation der Zusammensetzung des Produktstromes um einen typischen Mittelwert herum an der Meßstelle hinausgehen. Darunter fallen auch metallische Verunreinigungen. Andererseits können darunter aber auch, bei gleichbleibender Zusammensetzung große Massestromschwankungen verstanden werden, etwa extreme Dichteminima durch Leerstellen in der Zigarette oder Maxima durch überhöhte Rippenanteile oder Materialverdickungen im sich bildenden Textilstrang.

Seit längerem sind Erkennungsverfahren für einzelne spezielle Typen von Fremdkörpern bekannt, wie z.B. induktive Metalldetektoren (z.B. DE 3714009 A1, Schröder, Fa. Hauni, Hamburg 1987). Diese wirken aber nur auf eine spezielle Sorte von Fremdkörpern, haben nur eine stark eingeschränkte und auf die meisten Fremdkörper gar keine Wirkung.

Allgemeinere Fremdkörpererkennungsverfahren sind vor allem in der Tabakindustrie im letzten Jahrzehnt bekannt geworden. Anstrengungen wurden unternommen, das veränderte Strömungsverhalten mancher Fremdkörper zur Ausschleusung mittels einer besonderen Luftverwirbelung auszunutzen (z.B. US 5,267,576 Heitmann, Fa. Hauni, Hamburg 1992) oder (WO 00/40105, Rizzolo, Fa. Fabriques de Tabac Reunies, Neuchatel, 1998). Dabei hat sich aber der nur begrenzte Wirkungsgrad dieser Anlagen in der Praxis erwiesen. Ein bestimmter Anteil von vor allem groben Fremdkörpern wird zwar in Abhängigkeit seiner geometrischen Form ausgeschleust, die meisten kleingeschnittenen, faserartigen Fremdkörper werden nicht erfaßt.

Viele Versuche wurden unternommen, Fremdkörper mit Hilfe von optischen Detektoren, bevorzugt Infrarot-Detektoren zu erkennen und per Luftausblasung zu beseitigen. (US 4,657,144, Martin, Philip Morris, New York, 1985) oder (US 5,476,108, Dominguez, R.J. Reynolds Tobacco Company, Winston Salem, 1992). Da optische oder IR-Sensoren aber kaum die Oberfläche des untersuchten Produktes durchdringen können, muß das Produkt zu einer sehr dünnen Schicht ausgebreitet werden, um zu einer optischen Erkennung der Fremdkörper zu kommen (DE 4325838, Roether, Hauni, Hamburg, 1993). Deshalb sind diese Verfahren auch nur an den Positionen einsetzbar, wo eine derartige Ausbreitung des Materialflusses möglich ist, also z.B. nicht am papierumhüllten fertigen Tabakstrang. Dabei führen aber Ähnlichkeiten in der Oberfläche und Farbe zwischen Fremdkörper und Produktstrom dazu, daß viele Fremdkörper nicht erkannt werden. Auch die Ausbreitung des Hauptstromes des zu untersuchenden Produktes führt bei den in Industrieprozessen meist üblichen hohen Durchsatzraten zu einer Produktverwirbelung, so daß auch ein optisch erkannter Fremdkörper infolge der Verwirbelung seine Position verändert und nicht ausgeblasen werden kann.

Es ist bekannt, Mikrowellen sehr kurzer Wellenlänge (5 bis 3 mm, d.h. bei Frequenzen von 40 bis 90 GHz), deren Wellenlänge im Bereich der räumlichen Ausdehnung der zu detektierenden Fremdkörper liegen muß, hinsichtlich ihres Streuverhaltens an Fremdkörpern auszuwerten und zur Fremdkörperdetektion zu benutzen (US 4 707 652, Lowitz, Philip Morris Incorp., New York, 1985). Da das Eindringen von elektromagnetischen Wellen in ein dielektrisches Produkt aufgrund der Mikrowellendämpfung durch die Materialfeuchtigkeit etwa im Bereich der Wellenlänge liegt, hat das Verhalten aufgrund der begrenzten Eindringtiefe nur eine begrenzte Wirkung. Darüber hinaus wirken insbesondere nicht nur Fremdkörper als Streuzentren, sondern auch alle Dichtefluktuationen im normalen Produktstrom, wie sie sich bei typischem faserförmigen Material oder gar Schüttgütern gar nicht vermeiden lassen.

Es ist auch ein Durchstrahlungsverfahren bekannt, bei dem sich das Produkt zwischen einer Sende- und einer Empfangsantenne befindet, mit dem Fremdkörper detektiert werden sollen (WO 00/09983, Moshe, Malcam Ltd, Nazareth - Israel, 1998). Dieses Verfahren hat aber den Nachteil, daß wie auch bei anderen Durchstrahlungsverfahren das empfangene Signal sehr kritisch auch von anderen Änderungen im Materialstrom abhängt. Das Verfahren ist daher ungenau und erfordert sehr aufwendige Auswertungen mit neuronalen Netzwerken oder "fuzzy logic" (S. 32/33 der Entgegenhaltung).

*Bei einem vorgeschlagenen Verfahren der eingangs genannten Art* (*WO 02/09539 A1*) *werden Kombinationssignale aufgrund der Änderungen der Resonanzfrequenz und der Breite der Resonanzkurve berechnet, um Fremdkörper zu detektieren.*

Die Aufgabe der Erfindung besteht in der Schaffung eines einfachen und zuverlässigen Verfahrens zum Erkennen der Fremdkörper.

Die erfindungsgemäße Lösung besteht darin, daß *das Verhältnis (B/A) der Änderungen ausgewertet und mit entsprechenden Mittelwerten verglichen wird und die Anwesenheit eines Fremdkörpers gemeldet wird, wenn das Verhältnis von den Mittelwerten um mehr als einen vorgegebenen Wert abweicht.*

Mikrowellen-Resonatoren bilden bei der Resonanzfrequenz eine stehende Welle, durch die, mit Hilfe spezieller Öffnungen und mit dielektrischem Material ausgekleideter Produktführungen das zu vermessende Material einschließlich der zu detektierenden Fremdkörper bewegt wird. Durch die spezielle Wechselwirkung zwischen der stehenden Mikrowelle und dem Produkt werden die Resonanzeigenschaften der Mikrowellen-Resonatoren verändert. Hauptvorteile dieser Resonatoren sind, daß man durch geometrische Ausgestaltung sich an unterschiedlichste Applikationen anpassen kann, daß man trotz relativ großer Wellenlängen von bis zu 30 cm eine hochauflösende Zone der Wechselwirkung zum Produkt bis zu 1 mm durch eine Feldfokussierung erreichen kann und dabei dennoch eine große Eindringtiefe ins Produkt erreicht. Außerdem hat im Gegensatz zu

Durchstrahlungs-Meßtechniken die Messung der Verluste von Mikrowellenenergie infolge der Absorption ins Produkt die Qualität einer exakten Meßgröße, was bei Durchstrahlungsmessungen infolge der nicht erfaßbaren Streuverluste nicht gegeben ist.

Ausführungsbeispiele für derartige Resonatoren sind für die Erreichung einer hohen Ortsauflösung bis zu 1 mm der Profilsensor, der mit Probenrohr-Durchmessern von 5-20 mm etwa im Tabakstrang einer Zigaretten- oder Zigarrenmaschine eingesetzt werden kann (EP 0 889 321 A1, Herrmann, Tews, 1998). Für eine seitliche Vermessung eines flächigen Produktes wie Papierbahnen, Folien oder dünne Schichten eignet sich der Planarsensor mit einer stehenden Welle über einer planaren Oberfläche dessen Streufeld ausgehend von der Sensoroberfläche in den Raum hinein exponentiell bis zu einer Ansdehnung von 10 cm hin abnimmt (EP 0 908 718 A1, Herrmann et al., Tews, 1998). Für Schüttgüter oder breitere Textilfaserstücke eignet sich besonders ein Sonsortyp, dessen Mikrowellen-Meßfeld in einem bis zu 3 cm breiten und 30 cm langen Meßspalt sehr homogen ausgebildet werden kann, so daß für die Stärke der Wechselwirkung zwischen Mikrowelle und Produkt die Lage des Produktes im Sensor gleichgültig ist. Dieser "Gabelresonator" ist ein im Grundmodus E010 angeregter Resonator, der in Richtung der Wandströme aufgeschnitten wurde, so daß sich eine Meßzone mit äußerst homogenem Meßfeld ergibt (EP 0 468 023 B1, Tews et al., Tews, 1991).

Als direkte Meßgrößen fallen bei der Mikrowellen-Resonatormeßtechnik zwei Größen an: die Veränderung A der Resonanzfrequenz und die Änderung B der Breite der Resonanzkurve gegenüber dem Leerzustand des Resonators. Der erste Effekt der Resonanzfrequenzverstimmung A hängt vor allem von der Verkürzung der Wellenlänge durch das dielektrische Produkt ab, das sich gerade im Meßfeld des Resonators befindet (also vom sog. Realteil der Dielektrizitätskonstanten). Der zweite Effekt B rührt von der Umwandlung der Mikrowellenenergie in Wärme her, die nur beim Resonatorverfahren exakt vermessen werden kann (der "Mikrowellen-Ofen-Effekt" oder der sog. Imaginärteil der Dielektrizitätskonstanten). Die von der Anmelderin entwickelte Meßtechnik wurde derart auf die Erreichung einer hohen Meßgeschwindigkeit und Präzision optimiert, daß jeweils nach 0,1 Millisekunden ein neuer A- und B-Wert ausgegeben werden können, also pro Sekunde 10.000 A- und 10.000 B-Werte.

Durch die Auswertung der Veränderung A der Resonanzfrequenz und der Änderung B der Breite der Resonanzkurve können Fremdkörper im Massestrom einfach und zuverlässig festgestellt werden, indem die laufend gemessenen Werte mit Mittelwerten verglichen werden und bei einer Abweichung, die über ein vorbestimmtes Maß hinausgeht, ein Fremdkörper gemeldet wird. Diese Meldung kann ein akustisches oder optisches Warnsignal auslösen oder vorteilhafterweise mit einer entsprechenden Einrichtung ein Ausschleusen des betreffenden Teils des Materialstroms bewirken.

Die Methode, wie diese beiden Meßgrößen A und B bestimmt werden, ist zweitrangig. Üblicherweise wird die Mikrowellenfrequenz so variiert, daß die momentane Resonanzkurve durchfahren wird und dadurch das Maximum, die Resonanzfrequenz, und die Halbwertsbreite bestimmt wird. Der Vergleich zu den abgespeicherten Daten des leeren Resonators liefert dann die Basismeßgrößen A und B. Man kann aber auch durch eine geregelte Verfolgung der Resonanzkurve erreichen, daß das Meßgerät den Resonator immer in Resonanz betreibt und aus der Abnahme der Resonanzamplitude gegenüber der des Leerzustandes auf die Halbwertsbreite schließt. Oder man verwendet zwei oder mehrere feste Frequenzen und beobachtet das Verhalten der Resonanz mit und ohne Produkt um zu den Größen A und B zu gelangen. Selbst bei einer einzigen Frequenz, die leicht gewobbelt werden kann, kann aus dem aktuellen Signal des Teils der beobachteten Resonanzkurve und deren Steigung auf die gerade geltende Resonanzfrequenz und Breite bzw. Halbwertsbreite der Resonanzkurve geschlossen werden.

Wesentlich für die Fremdkörpererkennung im beobachteten Produktstrom ist, daß beide direkten Meßgrößen A und B von drei Faktoren abhängen:

$$A = F * K_A * M$$

$$B = F * K_B * M$$

1. Der Feldfaktor F:

Beide Größen A und B sind in gleicher Weise von der Stärke des Mikrowellen- Meßfeldes abhängig, das sich am Ort der Probe ausbildet. Im einfachsten Fall kann dieser Faktor als Verhältnis der elektrischen Feldenergie im Raumbereich der Probe zu der im gesamten Resonator angegeben werden

2. Die Masse M:

Beide Größen sind in gleicher Weise von der Masse M des Produktes, die sich gerade im Feld befindet abhängig. Diese einfache lineare Beziehung hat sich bisher in allen Fällen der praktischen Erprobung als gültig erwiesen. Komplexere Zusammenhänge könnten prinzipiell durch eine Reihenentwicklung nach M mit verschwindendem Absolutglied dargestellt werden. Tatsächlich kann die Reihe mit befriedigender Genauigkeit nach dem ersten Glied abgebrochen werden. Dies drückt die Tatsache aus, daß bei konstantem Stoffgemisch sowohl die Unterschiede der Realteils wie des Imaginärteils der Dielektrizitätskonstanten gegenüber dem Vakuum masseproportionale Größen sind.

3. Die Konzentrationsfaktoren $K_A$ und $K_B$:

Sie bringen zum Ausdruck, welchen Anteil die unterschiedlichen Stoffkomponenten beim Zustandekommen der beiden Größen A und B besitzen. Diese beiden Konstanten sind aufgrund der Unterschiedlichkeit der physikalischen Prozesse, die den Größen A und B zugrunde liegen auch unterschiedlich in der Gewichtung der Komponenten eines Stoffgemisches. Beispielsweise kann ein Fremdkörper in Form eines Plastikteiles einen großen Anteil auf die Resonanzfrequenzverstimmung A haben, aber fast gar keinen Anteil auf die Wärmeverluste B der Mikrowellenenergie. Wenn die Konzentrationsgröße des Fremdkörpers im Produktteil, das sich gerade im Meßfeld befindet $C_{FK}$ ist und $C_H$ die Konzentration des Produktstromes, das sich gerade im Meßfeld befindet, so gilt für die Größen $K_A$ und $K_B$, entsprechend den relativen Anteilen der Dielektrizitätskonstanten der Komponenten der Mischung:

$$K_A = E_H' * C_H + E_{FK}' * C_{FK}$$

$$K_B = E_H'' * C_H + E_{FK}'' * C_{FK}$$

$$C_H = M_H / M$$

$$C_{FK} = M_{FK} / M$$

Damit wird aber deutlich, daß das Verhältnis der beiden direkten Mikrowellen-Meßgrößen B und A solange konstant bleibt, wie sich an der stofflichen Zusammensetzung nichts ändert. Masseschwankungen im Produktstrom (z.B. bei Schüttgütern oder im Tabakstrang) haben zwar auf B wie A einen Einfluß, nicht dagegen auf das Verhältnis der beiden Größen. Ändert sich dagegen die Zusammensetzung des Produktes, das sich gerade im Meßfeld des Resonators befindet, etwa durch die Anwesenheit eines Fremdkörpers, so ändert sich auch das Verhältnis B/A.

Bei sonst konstanter Zusammensetzung des Materials im Produktstrom besteht somit die erfindungsgemäße Erkennung von Fremdkörpern darin, daß das Meßgerät die beiden Meßgrößen B und A durcheinander dividiert, eine Gleitmittelwertbildung durchführt, und jeden aktuellen B/A-Wert mit dem Gleitmittelwert vergleicht. Weicht der Einzelwert von B/A vom Gleitmittelwert über einen einstellbaren Mindestbetrag ab, so gilt der Fremdkörper als erkannt und eine Alarmmeldung bzw. elektromechanische Anordnung für den Auswurf kann aktiviert werden.

In der Regel ist aber auch die Homogenität der Zusammensetzung des Produktstromes nicht ideal sondern von statistischen Fluktuationen gekennzeichnet. Dies tritt z.B. durch Schwankungen im Feuchtegehalt des Materials auf, was einer ständigen Veränderung der Zusammensetzung des Materials entspricht. Die dadurch auftretende statistische Schwankung des Wertes von B/A um einen Mittelwert erfordert dann auch die Trennung der Veränderung von B/A infolge statistischer Materialschwankungen und der durch einen Fremdkörper. Auch in diesem Fall ist die Abweichung des Einzelwertes gegenüber dem Gleitmittelwert, die die normale statistische Schwankung übertrifft, ein Maß für die Anwesenheit eines Fremdkörpers: Die einstellbare Schwelle für die Erkennung muß der normalen statistischen Schwankung angepaßt werden.

Aber auch für Schwankungen von B/A die innerhalb der statistischen Schwankungsbreite des Produktstromes liegen, kann das Resonatorverfahren zur Detektion von Fremdkörpern genutzt werden. Dazu kann die Wirkung eines Fremdkörpers auf den Ausdruck B/A verglichen werden mit der Wirkung auf die masseproportionale Größe A: Tritt zum Beispiel typischerweise infolge der schnellen Bewegung eines Fremdkörpers durch das Meßfeld im zeitlichen Verlauf von B/A ein Minimum auch innerhalb der normalen statistischen Fluktuation auf, und fällt dies zusammen mit dem gleichzeitigen Auftreten eines Maximums im zeitlichen Verlauf von A, so kann man mit großer Wahrscheinlichkeit von der Anwesenheit eines Fremdkörpers ausgehen. Dies ist bei Fremdkörpern in Form von Kunststoffen , Gummiteilen etc. der Fall, die kaum eine Veränderung von B, sehr wohl aber eine Vergrößerung von A bewirken, entsprechend dem relativen Anteilen des Real- und Imaginärteils des Fremdkörpers zu dem des Produktstromes. Es gibt aber auch Fremdkörper, bei denen ein lokales Maximum von B/A mit einem Maximum von A zusammenfällt (z.B. nasse Holzteile in Tabak) oder ein lokales Maximum von B/A mit einem Minimum von A (z.B. leichte Fremdkörperteile geringer Dichte und höherer Feuchte in Hauptstrom hoher Dichte und niedriger Feuchte). Entscheidend für die Detektion ist die zeitliche Koinzidenz der Bewegung im Konzentrationsausdruck B/A und in A. Die Berechnung zeitlich eng begrenzter Korrelationskoeffizienten sind dafür ein gutes Hilfsmittel.

Unter Umständen macht aber auch die alleinige Abfrage der Größe A einen Sinn für die Fremdkörperdetektion, wenn z.B. lediglich eine Materialleerstelle am Tabakstrang oder eine Materialverdichtung in Textilfasern detektiert und aussortiert werden soll. Eine derartige Fehlstelle gilt dann als erkannt, wenn der Einzelwert gegenüber dem Gleitmittelwert sich um eine einstellbare Mindestschwelle entfernt hat.

Zusammenfassend kann festgestellt werden, daß für die Fremdkörpererkennung sich die beiden Mikrowellen-Resonatormeßgrößen B/A und A eignen. Sie können einerseits jede für sich ausgewertet werden: B/A eignet sich bei genügend großen Fremdkörpern, die die Zusammensetzung des Materials deutlich stärker verändern, als sie durch die normalen statistischen Schwankungen gegeben sind. A eignet sich für die Detektion extremer Masseschwankungen wie sie in Löchern oder Verdichtungen auftreten. In beiden Fällen wird die Abweichung des einzelnen Mikrowellen-Fremdkörperwertes B/A bzw. A gegenüber dem Gleitmittelwert von B/A bzw. A verglichen und bei Überschreiten einer einstellbaren Schwelle als Fremdkörpersignal angezeigt. Im anderen Fall, wenn die Fremdkörpersignale nicht so ausgeprägt sind, liefert die zeitliche Koinzidenz von Extremwerten von B/A und solchen von A sowie die Feststellung einer engen Korrelation beider Signale einen zuverlässigen Hinweis auf einen Fremdkörper. Die Unterscheidung der verschiedenen Fälle kann während der Messung automatisch erfolgen.

## Patentansprüche

1. Verfahren zum Erkennen von Fremdkörpern in kontinuierlichen Massestömen aus faserförmigem, strangförmigem oder schüttgutartigem Material mit Hilfe von Mikrowellen, bei dem der Massestrom durch das Feld eines Mikrowellen-Resonators geführt wird und bei dem die durch das Material bewirkte Änderung (A) der Resonanzfrequenz und die Änderung (B) der Breite der Resonanzkurve des Mikrowellen-Resonators bestimmt wird, **dadurch gekennzeichnet, daß** das Verhältnis (B/A) der Änderungen ausgewertet und mit entsprechenden Mittelwerten verglichen wird und die Anwesenheit eines Fremdkörpers gemeldet wird, wenn das Verhältnis von den Mittelwerten um mehr als einen vorgegebenen Wert abweicht.

**2.** Verfahren nach Anspruch 1, **dadurch gekennzeichnet, daß** gleitende Mittelwerte verwendet werden.

**3.** Verfahren nach einem der Ansprüche 1 oder 2, **dadurch gekennzeichnet, daß** bei Feststellung eines Fremdkörpers ein Warnsignal abgegeben wird.

**4.** Verfahren nach einem der Ansprüche 1 bis 3, **dadurch gekennzeichnet, daß** bei Feststellung eines Fremdkörpers ein den Fremdkörper enthaltender Teil des Massestroms ausgeschleust wird.

## Claims

**1.** A method of detecting foreign bodies in continuous mass streams of fibrous material, strand-like material or material similar to bulk goods with the aid of microwaves, in which the mass flow is led through the field of a microwave resonator and in which the change (A) in the resonant frequency, effected by the material, and the change (B) in the width of the resonance curve of the microwave resonator is determined, wherein the ratio (B/A) of the changes is evaluated and compared with corresponding averages, and the presence of a foreign body is reported when the ratio differs from the averages by more than a predefined value.

**2.** The method as claimed in claim 1, wherein sliding. averages are used.

**3.** The method as claimed in either of claims 1 and 2, wherein, if a foreign body is detected, a warning signal is output.

**4.** The method as claimed in one of claims 1 to 3, wherein, when a foreign body is detected, a part of the mass stream containing the foreign body is removed.

## Revendications

**1.** Procédé de détection de corps étrangers dans des courants de masses constitués d'un produit en forme de fibres, de brins ou en vrac, à l'aide de micro-ondes, dans lequel le courant de masse est guidé à travers le champ d'un résonateur à micro-ondes et dans lequel la variation (A), provoquée par le produit, de la fréquence de résonance et la variation (B) de la largeur de la courbe de résonance du résonateur à micro-ondes sont déterminées, **caractérisé en ce que** le rapport (B/A) des variations est exploité et comparé à des valeurs moyennes correspondantes, et la présence d'un corps étranger est signalé lorsque le rapport s'écarte des valeurs moyennes de plus d'une valeur prédéfinie.

**2.** Procédé selon la revendication 1, **caractérisé en ce qu'**on utilise des valeurs moyennes glissantes.

**3.** Procédé selon l'une des revendications 1 ou 2, **caractérisé en ce qu'**un signal d'avertissement est délivré lorsqu'est constaté un corps étranger.

**4.** Procédé selon l'une des revendications 1 à 3, **caractérisé en ce qu'**une partie du courant de masse contenant le corps étranger est écartée lorsqu'un corps étranger est constaté.